# EUROPEAN PATENT APPLICATION

(11) **EP 3 527 369 A1**
(43) Date of publication of application: **21.08.2019**
(21) Application number: 19165160.3
(22) Date of filing: 22.11.2011
(51) Int. Cl.: B32B 27/08, B32B 27/32, B32B 27/36

(54) **A SHEET, A METHOD OF MAKING AND USING A SHEET AS A LID FOR PACKAGES**

(62) Divisional of application: 11788360.3
(71) Applicant: Danapak Flexibles A/S, 4200 Slagelse (DK)
(72) Inventor: Johansen, Peter, 5000 Odense C (DK)
(74) Representative: AWA Denmark A/S

(57) **Abstract**

A sheet (2) is made by the method of the invention, in particular for use for the punching of lids for containers, in that a PE layer (5a) and a polyester (PET) welding layer (5b) of an amorphous polyester are applied to a base sheet layer (4) of polyester (PET) by coextrusion to form the finished sheet laminate (2).

This ensures that the sheet (2) is transparent throughout, just as it provides the possibility of controlled delamination by separation of the PE layer (5a) from the PET welding layer (5b) in the welding area only, when the sheet (2) is pulled off a container (1). In addition, the sheet does not curl when punched into lids prior to being applied to the containers (1).

## Description

### The prior art

The invention relates to a sheet and a method of making a sheet, in particular for the punching of lids for packages, such as packages or containers of polyester (PET), said sheet comprising a transparent polyester base sheet (PET), as well as use thereof.

WO 98/25760 A1 discloses a sheet laminate, where the sheet is made by laminating two sheets containing several separate layers together. The sheet laminate may be used as a lid on containers, said sheet being welded to the edge of the container.

Owing to the selection of material and the laminated structure with many layers in the two sheets in the laminate, the known type of sheet will not possess a sufficient rigidity to be suitable for the punching for lids before they are applied to the container, as a lid of this type will typically curl after the punching.

Sheets are also known in various materials and are used as a lid on packages, e.g. cups and bottles, for the packaging of especially milk products, fruit juices, drinking water, salads, pates, etc. The lid may be made of Al sheet, to which a layer of welding lacquer has been applied in order for it to be able to adhere to the package.

This type of lid, however, is not transparent, which is a widespread wish among consumers.

When using a PET sheet which is transparent, a layer of welding lacquer has to be applied, which, since it is milky, is applied only to the rim where the welding to the lid is to take place in order not to destroy the transparency.

The drawback of this application of welding lacquer is that it has to be applied precisely, either to the punched lids or in an assembled form to a web of sheet in connection with the actual closure of the package.

This adds to the costs, and, in any event, the welding lacquer leaves a visible rim along the lid edge, which is an aesthetic drawback.

### The object of the invention

It is the object of the invention to remedy these drawbacks and deficiencies of the use of a PET base sheet in connection with PET containers or packages, such as containers of amorphous polyester (APET) or crystalline polyester (CPET), and this is achieved according to the invention by a method, wherein the sheet is made by coating the transparent polyester base sheet (PET) with an additional layer by coextruding a polyolefin layer and a polyester (PET) welding layer of amorphous polyester on top of the transparent PET base sheet to form the sheet.

The sheet made by the method is a transparent polyester sheet (PET), onto which a layer of polyolefin layer and a PET welding layer are coextruded to form the sheet, said polyolefin layer being disposed between the transparent polyester base sheet (PET) and the PET welding layer.

First and foremost, this ensures that complete transparency is provided, even over the weld. Further, a frequently considerable waste of material is avoided, since there are no special requirements with respect to the position of the weldable coating, as this is present everywhere on the sheet. Additionally, the coextruded layer on top of the transparent PET base sheet ensures that the punched lid possesses a suitable rigidity, which prevents the lid from curling, thereby making it possible to punch lids and to apply pre-punched lids to the containers.

Further, it is very advantageously ensured that the expensive printing processes, where a layer of welding lacquer has to be applied, are avoided.

All these factors contribute to simplifying and thereby reducing the costs of the sheet, which, as mentioned, has been given complete transparency.

In addition, the welding layer of PET, which is exposed to the interior of the container when applied as a lid, has superior organoleptic properties when compared to welding layers of polypropylene or polystyrene, since it is not likely to transfer any taste to the food or beverage in the container. Thus, the sheet according to the present invention is suitable e.g. for lids on containers used for foods or beverages, which are otherwise very susceptible to adapt taste or smell from the packaging material. Examples of such foods or beverages are water, juice, milk or the like. In addition, the PET welding layer shows a high resistance to fats and oils, and will thus be suitable for use in connection with fat containing foods and/or beverages, e.g. milk, yoghurts, cheese, salads, pates or the like.

Finally, the coextrusion of the additional layers means that this lid sheet is stronger than a corresponding one provided with welding lacquer, thereby allowing the thickness of the PET base sheet to be reduced correspondingly, thus achieving a saving of weight and material of about 15%.

It is preferred, as mentioned in claims 2 - 4 and 10, that the polyolefin layer is a polyethylene (PE) layer, preferably in the form of a homopolymer or a copolymer of PE, such as an acrylic PE polymer or an ethyl vinyl acetate (EVA) containing PE or mixtures thereof, in one embodiment, and that the coextrusion of the polyolefin layer/PE layer and the PET welding layer on top of the transparent PET base sheet takes place such that the polyolefin layer, such as the PE layer, is disposed between the transparent polyester sheet (PET) and the PET welding layer.

As disclosed in claim 12, the PET welding layer is made of PETG, since PETG does not crystallize. This results in a welding layer with improved welding properties e.g. when welding at temperatures below 230 °C in contrast to normal polyester (PET), which loses its welding properties when it crystallizes.

When, as mentioned in claims 5 and 11, a primer is applied to the transparent polyester base sheet (PET) prior to the application of the coextruded layers, including the PE layer, and PET welding layer, an enhanced adhesion is achieved between the PET base sheet and the PE layer. The enhanced adhesion between the PET layer and the PE layer allows the delamination to be controlled, said delamination taking place between the polyolefin layer/ PE layer and the PET welding layer.

When, as stated in claim 6, the PET welding layer is disposed against the container of PET, safe fusion and thereby tightly fitting assembly of lid and container are achieved.

As stated in claims 7 and 13, when using a PET base sheet with a thickness of min. 23 µm and the applied coextruded layer with an overall weight of min. 7 g/m², corresponding to a thickness of min. 7 µm, a relatively inexpensive and material-saving lid sheet is achieved.

As stated in claim 14, the sheet is punched for lids, and finally it is expedient, as stated in claim 15, to use the lid sheet for welding to containers and the like, in that the sheet is punched to the final shape of the lid sheet prior to the welding to the container, said sheet lid being welded to the container with the PET welding layer facing toward the container, and that the lid, by a subsequent separation from the package by a pull in the sheet, causes the PE layer to remain on the PET base sheet (4) and the PET welding layer to remain on the container in the welding area, as the PE and PET welding layers will delaminate in the welding area only. This ensures that when the lid is pulled off the container, a totally precise delamination of the PE layer and the PET welding layer will take place, thereby ensuring that the sheet is pulled off without the lid being torn to pieces.

### The drawing

An example of a method of making a lid sheet according to the invention and its use will be described more fully below with reference to the drawing, in which
- fig. 1: shows a cup with a lid sheet prior to the welding-together, and
- fig. 2: shows a sectional view of the cup and the lid sheet after pulling-off, opening, seen in the direction II - II in fig. 1.

### Description of an exemplary embodiment

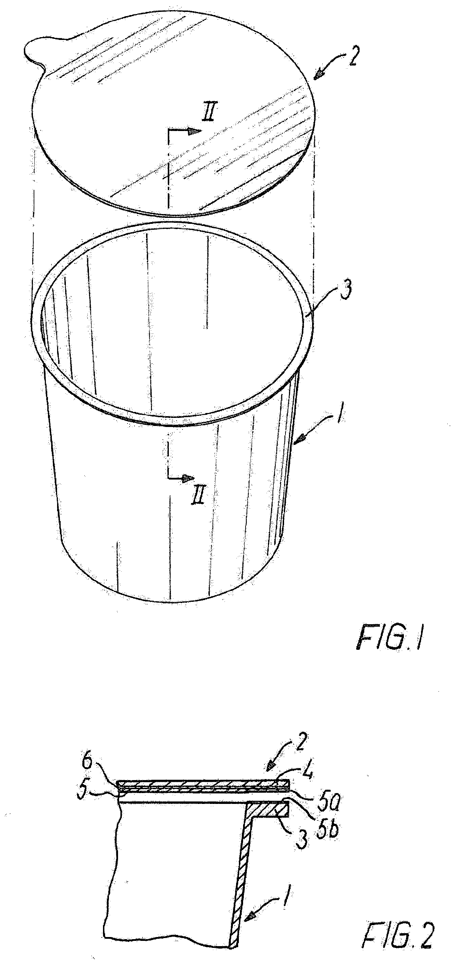

The example in fig. 1 shows a container 1, which is made of polyester (PET), e.g. amorphous polyester (APET) or crystalline polyester (CPET).

The container may be of the type which is known as a package for water, fruit juices, salads or similar products. But it may also be a tray or the like for salad foods or a bottle for milk or soft drinks.

In the example shown, the container 1 is provided with an upper rim 3, which is e.g. plane on the upper side, to enable welding of a lid onto the rim.

When this container 1 has been filled with its contents, it has to be closed with a lid 2. This lid 2 has preferably been punched in advance and is thus adapted to the opening of the container 1.

This lid 2, which consists of a sheet laminate, is shown in a sectional view in fig. 2. It comprises a base sheet 4 of PET, which is transparent, and may have a thickness of between 23 and 50 µm, e.g. a thickness of 30-40 µm. The thickness is adapted to the need for strength, barrier properties, size, etc.

On this base sheet 4, a PE layer, which is designated 5a, and a PET welding layer, which is designated 5b, are provided by coextrusion directly onto the surface of the advancing PET base sheet 4. The PET welding layer 5b is intended to be welded together with the rim portion 3 of the container.

The PE layer 5a may be a homopolymer or a copolymer of PE - a suitable PE copolymer is an acrylic copolymer of PE or a ethyl vinyl acetate (EVA) containing PE - and will just be called the PE layer. These copolymers have been found to exhibit sufficient bonding to the PET layers in the sheet, which is particularly useful in respect of the PET base sheet. In addition, use of any of these copolymers ensures that delamination between the PET welding layer and the polyolefin layer, i.e. the PE layer, only occurs in the welding area. The PET welding layer 5b may likewise be a homopolymer or a copolymer of PET and will be called the PET welding layer. A highly suitable material for the welding layer is PETG, a pure amorphous polyester which does not crystallize, i.e. it remains amorphous. This results in a welding layer with improved welding properties in contrast to normal polyester, which loses its welding properties when it crystallizes at temperatures well below 220 - 230 °C, which is the maximum temperature level for sealing, due to the softening point of the base PET film.

These two layers 5a and 5b preferably have an overall amount of between 7 and 25g/m², or corresponding to about 7 - 22 µm. The PE layer preferably has a thickness of 5 - 15 g/m², corresponding to about 5.5 - 17 µm, and the PET welding layer preferably has a thickness of 2 - 10 g/m², or corresponding to about 2.8 - 7.5 µm.

In a preferred embodiment, the base sheet 4 of polyester PET has applied thereto a primer 6, which ensures enhanced adhesion between the polyester (PET) in the base sheet 4 and the PE layer 5a in the coextruded layer 5, which is applied on top of the base sheet 4. The preferred primer is acrylic-based and contains polyethylene imine (PEI), where especially PEI is responsible for the enhanced adhesion between the base layer of PET 4 and the PE layer 5a. The limit value of the adhesion is not quite clear as yet, but it is expected to be within 5 - 20 N for a 15 mm wide test strip.

An alternative embodiment of making this sheet 2 comprises extrusion of a base sheet 4 and, by coextrusion, the creation of the layer 5 by a first layer 5a and an additional PET welding layer 5b, said layers 4, 5 being put together to form the lid sheet 2.

It is preferred that the lid sheet is calendered immediately after the application of the coextruded layer to the transparent PET base sheet.

These methods provide the advantage that the sheet laminate 2 will be transparent and will be weldable in its full extent. Thereby, any lid shape and dimension may be punched from a roll of sheet, as the lid may be adapted to the size and shape of the package. The lid 2 may be applied from a roll of the sheet or may preferably be punched into its final shape prior to being applied to the containers1.

In connection with the filling of containers, e.g. cups, in a filling machine, the lid, preferably pre-punched into it final shape, is applied subsequently by application and welding to the rim portion 3.

When the container has thus been filled and closed with a lid 2, the user will be able to pull off the lid by pulling the lid flap, as indicated in fig. 2.

Hereby, the PE layer 5a and the PET welding layer 5b will be separated, delaminated, in such a manner that the pulling-off, the opening, is controlled and totally precise. Thus, the PET welding layer will remain on the container in the welding area, e.g. on the rim thereof, and remain on the lid 2 in the non-welded area.

Since the two layers 5a and 5b are relatively stiff, the dimensions of the base sheet 4 may be reduced, thus saving weight as well as consumption of material. Moreover, as a result of the enhanced rigidity of the lid sheet, the punched lids do not curl after the punching.

Optionally, an additional layer with print/colour may be applied in a generally known manner, either before or after the punching of the lids, just as an additional barrier layer may optionally be applied to the lid sheet, e.g. prior to the coating and/or punching.

## Claims

1. A method of making a sheet, in particular for use as a punched sheet lid for containers, such as containers of polyester (PET), said sheet comprising a transparent polyester base sheet (PET) (4), **characterized in that** the sheet (2) is made by coating the transparent polyester base sheet (4) with an additional layer (5), which is applied on top of the transparent polyester base sheet (PET) (4) by coextruding a polyolefin layer (5a) and a PET welding layer (5b) of amorphous polyester, to form the sheet (2).

2. A method according to claim 1, **characterized in that** the polyolefin layer (5a) is a polyethylene (PE) layer, preferably in the form of a homopolymer or a copolymer of PE.

3. A method according to claim 2, **characterized in that** the polyolefin layer is a copolymer of polyethylene (PE), such as an acrylic PE polymer or an ethyl vinyl acetate (EVA) containing PE or mixtures thereof.

4. A method according to claim 1, 2 or 3, **characterized in that** the coextrusion of the polyolefin layer/PE layer (5a) and the PET welding layer (5b) on top of the transparent polyester base sheet (PET) (4) takes place such that the polyolefin layer (5a), such as the PE layer, is disposed between the transparent polyester base sheet (PET) (4) and the PET welding layer (5b).

5. A method according to any one of claims 1 - 4, **characterized in that** a primer layer is applied to the transparent polyester base sheet (PET) prior to the application of the coextruded polyolefin layer (5a) and PET welding layer (5b).

6. A method according to any one of claims 1 - 5, **characterized in that** the punched lid sheet (2) is welded to the package (1), said PET welding layer (5b) adhering to the container (1).

7. A method according to any one of claims 1 - 6, **characterized in that** the PET base sheet (4) is given a thickness of between 23 and 50 µm, and that the coextruded layer (5) is given an amount of between 8 and 20 g/m², corresponding to a thickness of between 9 and 22 µm.

8. A method according to any one of claims 1 - 7, **characterized in that** the PET base sheet (4) is extruded immediately before the coating with the coextruded layer (5) with a polyolefin layer (5a) and PET welding layer (5b).

9. A sheet, comprising a transparent polyester base sheet (PET) (4), **characterized in that** the transparent polyester base sheet (4) is coated with an additional layer (5) on top of the transparent polyester base sheet (PET) (4) in the form of a polyolefin layer (5a) and a PET welding layer (5b) of amorphous polyester, which are coextruded on to the polyester base sheet to form the sheet (2), said polyolefin layer (5a) being disposed between the transparent polyester base sheet (PET) (4) and the PET welding layer (5b).

10. A sheet according to claim 9, **characterized in that** the polyolefin layer (5a) is a polyethylene (PE) layer, preferably in the form of a homopolymer or a copolymer of PE, wherein a copolymer is chosen from a group comprising an acrylic PE polymer or an ethyl vinyl acetate (EVA) containing PE or mixtures thereof.

11. A sheet according to any one of claims 9 - 10, **characterized in that** a primer layer (6) is present between the PET base sheet (4) and the polyolefin layer (5a).

12. A sheet according to any one of claims 9 - 11, **characterized in that** the PET welding layer (5b) is made of PETG.

13. A sheet according to any one of claims 9 - 12, **characterized in that** the PET base sheet (4) has a thickness of between 23 and 50 µm, and that the coextruded layer (5) has a thickness of between 7 and 25 g/m², corresponding to a thickness of between 7 and 22 µm.

14. A sheet according to any one of claims 9 - 13, **characterized in that** the sheet is punched to a lid for a package (1).

15. Use of the sheet according to claims 9 - 14 to be welded as a lid to a container (1) of polyester (PET) or a container onto which a layer of polyester is applied, **characterized in that** the sheet (2) is punched to the final shape of the lid prior to the welding to the container (1), said sheet layer being welded to the container with the PET welding layer (5b) facing toward the container (1), and that the lid, at a subsequent separation from the package (1) by a pull in the sheet (2), causes the PE layer (5a) to remain on the PET base sheet (4) and the PET welding layer (5b) to remain on the container (3) in the welding area, as the PE layer (5a) and the PET welding layer (5b) delaminate in the welding area only.
